# EUROPÄISCHE PATENTANMELDUNG

(11) **EP 1 389 825 A2**
(43) Veröffentlichungstag der Anmeldung: **18.02.2004**
(21) Anmeldenummer: 03102174.4
(22) Anmeldetag: 16.07.2003
(51) Int. Cl.: H02K 7/18, B60K 6/04, F16H 45/02, F16H 47/06, F16H 41/24

(54) **Antriebsmotoranordnung, insbesondere für ein Kraftfahrzeug**

(30) Priorität: 07.08.2002 DE 10236223
(71) Anmelder: SIEMENS AKTIENGESELLSCHAFT, 80333 München (DE)
(72) Erfinder: Dehrmann, Uwe, 97076 Würzburg (DE)

(57) **Zusammenfassung**

Zum einfachen und insbesondere axial kompakten Zusammenbau einer Verbrennungsmaschine (1) mit einem Drehmomentwandler (3) über einen axial zwischenliegenden Starter-Generator (2) mit Ankopplung der Rotorwelle bzw. Kurbelwelle (1.1) der Verbrennungsmaschine (1) an einen Wandlerdeckel (3.2) des Drehmomentwandlers (3) über eine Flexscheibe (5) ist eine entsprechende Drehmitnahme-Verbindung, insbesondere in Form eines Schraubelementes (6), in einem vorhandenen Freiraum radial außerhalb des Wandlerdeckels (3.2) und axial innerhalb der motorseitigen Erstreckung der Flexscheibe (5) vorgesehen.

## Beschreibung

Die Erfindung bezieht sich auf eine Antriebsvorrichtung gemäß Patentanspruch 1.

Eine Antriebsvorrichtung mit den ersten zwei Teilmerkmalen des Anspruchs 1 ist durch die WO 02/26513 A1 bekannt; der Stator-Generator ist dabei an der Verbrennungsmaschine axial abgewandter Seite des Drehmomentwandlers angeordnet. Die Kurbelwelle der Verbrennungsmaschine ist über eine sich radial zwischen dieser und dem Drehmomentwandler erstreckende Flexscheibe als elastisches Verbindungselement mit einem antriebsseitigen Wandlerdeckel des Drehmomentwandlers in Drehmitnahme verbunden; dazu ist die Flexscheibe mit ihrem radial äußeren Ende über axial von der Seite der Verbrennungsmaschine her zu bedienende Schraubverbindungen an den Wandlerdeckel des Drehmomentwandlers angekoppelt. Durch die Flexscheibe werden axiale Pumpenbelastungsbewegungen durch den Drehmomentwandler von der Verbrennungsmaschine ferngehalten.

Gemäß Aufgabe vorliegender Erfindung soll eine einfach herstell- und insbesondere montierbare, axial kurzbauende Antriebsvorrichtung der Hybrid-Art mit einer auf ein AutomatikGetriebe mit Drehmomentwandler arbeitende Verbrennungsmaschine und einer axial dazwischenliegenden elektrischen Maschine, insbesondere einem Starter-Generator, mit Innenrotor geschaffen werden.

Die Lösung dieser Aufgabe gelingt erfindungsgemäß durch eine Antriebsvorrichtung gemäß Patentanspruch 1; vorteilhafte Ausgestaltungen sind jeweils Gegenstand der Unteransprüche.

Die erfindungsgemäße Antriebsvorrichtung ermöglicht unter Ausnutzung eines vorhandenen freien radialen Bauraums ohne Notwendigkeit eines zusätzlichen axialen Bauraums bei Beibehaltung vorgegebener definierter Schnittstellen der zu montierenden Bauteile und bei vorteilhafter separater Montage und Wuchtung des Starter-Generators eine einfache Kopplung zwischen dem Drehmomentwandler einerseits und dem elastischen Verbindungselement, insbesondere in Form einer Flexscheibe, andererseits.

Aufgrund der axial kurzen Bauart kann in vorteilhafter Weise eine zwischen der Kurbelwelle der Verbrennungsmaschine einerseits und der Anbindung an den Drehmomentenwandler andererseits erforderliche Zwischenwelle einteilig mit der Rotorwelle des Starter-Generators ausgebildet werden.

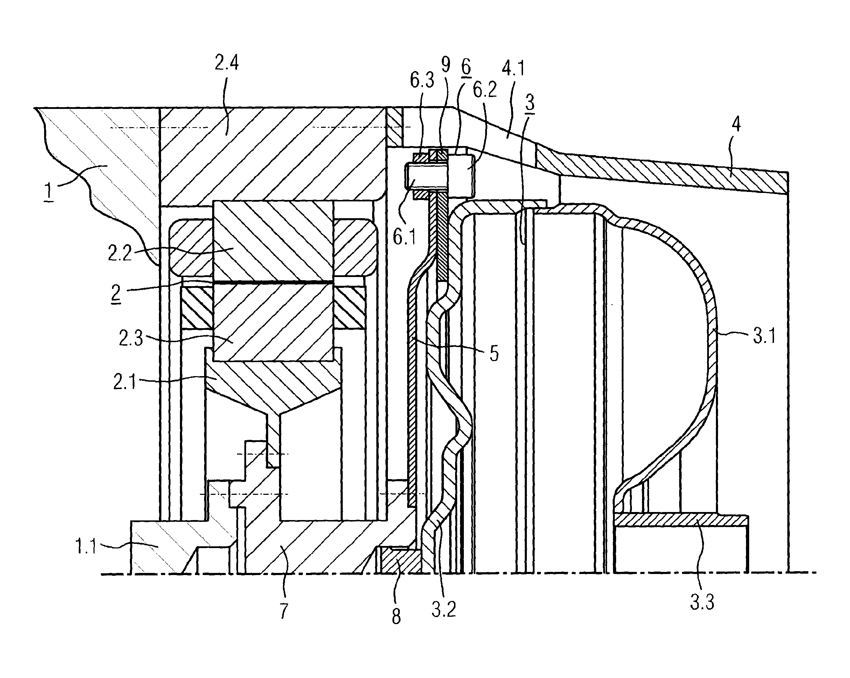

Die Erfindung sowie weitere vorteilhafte Ausgestaltungen der Erfindung gemäß Merkmalen der Unteransprüche werden im folgenden anhand eines in der Zeichnung in einem axialen Schnitt dargestellten Ausführungsbeispiels erläutert.

Eine in der Zeichnung dargestellte Antriebsvorrichtung, beispielsweise ein Hybrid-Antrieb für ein Kraftfahrzeug, enthält als wesentliche axial in Folge hintereinander angeordnete Bauteile eine Verbrennungsmaschine 1, einen Starter-Generator 2 in Form einer Asynchronmaschine, einen Drehmomentwandler 3 sowie ein Automatikgetriebe, von dem nur die Getriebegehäuse-Glocke als Getriebeteil 4 ausschnittsweise angedeutet ist.

Der innere Aufbau eines u.a. eine Pumpenschale 3.1 mit Pumpennabe 3.3 und einen Wandlerdeckel 3.2 aufweisenden Drehmomentwandlers ist an sich, z.B. durch die Zeitschrift ATZ 88 (1966), Seiten 81-83 oder VDI-Bereichte, Nr. 1175, 1995, Seiten 281, 282, bekannt.

Der Starter-Generator weist einen Statorhalter 2.4 auf, dessen getriebeabgewandte Stirnseite mit der Verbrennungsmaschine 1 und dessen getriebezugewandte Stirnseite mit einer den Drehmomentwandler 3 axial und radial übergreifenden Getriebegehäuse-Glocke des Getriebeteils 4 verbunden ist. Von dem Statorhalter 2.4 wird ein Statorpaket 2.2 mit eingebrachter Statorwicklung aufgenommen. Ein Rotorpaket 2.3 mit eingebrachter Rotorwicklung, insbesondere in Form einer Käfigwicklung einer Asynchronmaschine, ist über einen Rotorträger 2.1 mit einer gleichzeitig einstückig als Rotorwelle ausgebildeten Zwischenwelle 7 verbunden, die mit ihrem einen axialen Ende an die Kurbelwelle 1.1 der Verbrennungsmaschine 1 und mit ihrem anderen axialen Ende an einem Führungszapfen 8 des Drehmomentwandlers 3 abgestützt und mit dem radial inneren Ende eines elastischen Verbindungselementes in Form einer Flexscheibe 5 zur Drehmitnahme mit dem Drehmomentwandler 3 gekoppelt ist. Die mit ihrem radial inneren Ende an die Zwischenwelle 7 gekoppelte Flexscheibe 5 ist zur Drehmitnahme mit dem Drehmomentwandler 3 mit ihrem radial äußeren Ende mit dessen Wandlerdeckel 3.2 verbunden.

Für die Drehmitnahme-Verbindung zwischen dem Wandlerdeckel 3.2 und der Flexscheibe 5 ist in vorteilhafter Weise ein an sich gegebener, ansonsten freier Bauraum radial außerhalb, d.h. in der Zeichnung oberhalb, des Drehmomentwandlers 3, ausgenutzt, wobei das für die Drehmitnahme vorgesehene Verbindungselement in Form eines Schraubelementes 6 erfindungsgemäß auch keinen zusätzlichen Bauraum axial über die getriebeabgewandte Erstreckung der Flexscheibe 5 hinaus benötigt; dadurch besteht kein zusätzlicher Bauraumbedarf für die Verbindung zwischen dem Starter-Generator 2 bzw. der Verbrennungsmaschine 1 über die Flexscheibe 5 einerseits und dem Drehmomentwandler 3 andererseits.

Als Verbindungselement zwischen der Flexscheibe 5 und dem Wandlerdeckel 3.2 ist nach einer Ausgestaltung der Erfindung ein Schraubelement 6 vorgesehen, das entweder axial durch den freien Raum unterhalb des Getriebeteils 4 oder radial durch eine Öffnung 4.1 in dem Getriebeteil 4 gut zugänglich bedienbar ist.

Nach einer Ausgestaltung der Erfindung ist ein Schraubelement 6 mit einem axial verlaufenden Gewindeschaft 6.1, einem getriebezugewandten Schraubenkopf 6.2 und einem getriebeabgewandten Gewindeaufnahmeteil 6.3 vorgesehen. Zur mittelbaren Anbindung des Wandlerdeckels 3.2 an das Verbindungselement, insbesondere in Form des Schraubelementes 6, ist eine Verbindungslasche 9 vorgesehen, die mit ihrem radial inneren Ende an dem Wandlerdeckel 3.2 fixiert ist und mit ihrem radial äußeren Ende das Schraubelement 6 aufnimmt.

Die Erfindung lässt sich wie folgt zusammenfassen:
Zum einfachen und insbesondere axial kompakten Zusammenbau einer Verbrennungsmaschine 1 mit einem Drehmomentwandler 3 über einen axial zwischenliegenden Starter-Generator 2 mit Ankopplung der Rotorwelle bzw. Kurbelwelle 1.1 der Verbrennungsmaschine 1 an einen Wandlerdeckel 3.2 des Drehmomentwandlers 3 über eine Flexscheibe 5 ist eine entsprechende Drehmitnahme-Verbindung, insbesondere in Form eines Schraubelementes 6, in einem vorhandenen Freiraum radial außerhalb des Wandlerdeckels 3.2 und axial innerhalb der motorseitigen Erstreckung der Flexscheibe 5 vorgesehen.

## Patentansprüche

1. Antriebsvorrichtung, insbesondere für ein Kraftfahrzeug,
- mit einer Verbrennungsmaschine (1) mit einer Abtriebswelle, insbesondere einer Kurbelwelle (1.1);
- mit einem abtriebsseitigen Automatikgetriebe (3;4) mit einem Getriebeteil (4) und einem Drehmomentwandler (3),
- mit einem axial zwischen der Verbrennungsmaschine (1) und dem Drehmomentwandler (3) angeordneten Starter-Generator (2), insbesondere in Form einer Asynchronmaschine, dessen Rotor an die Abtriebswelle der Verbrennungsmaschine (1) koppelbar ist;
- mit einer Drehmitnahme zwischen einem antriebsseitigen Wandlerdeckel (3.2) des Drehmomentwandlers (3) einerseits und der Abtriebswelle der Verbrennungsmaschine (1) bzw. dem Rotor des Starter-Generators (2) andererseits über ein axial elastisches Verbindungselement, insbesondere eine sich radial zwischen dem Drehmomentwandler (3) einerseits und dem Starter-Generator (2) andererseits erstreckende Flexscheibe (5);
- mit einer radial außerhalb des Wandlerdeckels (3.2) und axial innerhalb der rotorseitigen Erstreckung der Flexscheibe (5) angeordneten Drehmitnahme-Verbindung zwischen dem Wandlerdeckel (3.2) und der Flexscheibe (5).

2. Antriebsanordnung nach Anspruch 1,
- mit einer Ausbildung der Drehmitnahme-Verbindung in Form zumindest eines axial von der Getriebeseite her bedienbaren Schraubelementes (6) oder dergleichen.

3. Antriebsanordnung nach Anspruch 1
- mit einer Ausbildung der Drehmitnahme-Verbindung in Form zumindest eines von radial außen bedienbaren Schraubelementes (6).

4. Antriebsanordnung nach Anspruch 3
- mit einem den Drehmomentwandler (3) und dessen Verbindung zu der Flexscheibe (5) übergreifenden Getriebeteil (4);
- mit einer Öffnung (4.1) in dem Getriebeteil (4) zur Bedienung des Schraubelementes (6) von radial außen.

5. Antriebsanordnung nach zumindest einem der Ansprüche 2-4
- mit einer Ausbildung des Schraubelementes (6) mit axial verlaufendem Gewindeschaft (6.1), getriebezugewandtem Schraubenkopf (6.2) und getriebeabgewandtem Gewindeaufnahmeteil (6.3).

6. Antriebsvorrichtung nach zumindest einem der Ansprüche 1-5
- mit einer Ausbildung des Starter-Generators (2) als elektrische Maschine mit Innen-Rotor.
